# EUROPÄISCHE PATENTSCHRIFT

(11) **EP 0 907 452 B1**
(45) Veröffentlichungstag und Bekanntmachung des Hinweises auf die Patenterteilung: **19.07.2000**
(21) Anmeldenummer: 97920720.6
(22) Anmeldetag: 18.04.1997
(51) Int. Cl.: B23K 1/015

(54) **VERFAHREN ZUM ABKÜHLEN VON LÖTGUT**
PROCESS FOR COOLING SOLDERED OBJECTS
PROCEDE DE REFROIDISSEMENT D'OBJETS BRASES

(30) Priorität: 18.04.1996 DE 19615338
(43) Veröffentlichungstag der Anmeldung: 14.04.1999
(73) Patentinhaber: LEICHT, Helmut, Walter, D-86343 Königsbrunn (DE)
(72) Erfinder: LEICHT, Helmut, Walter, D-86343 Königsbrunn (DE)
(74) Vertreter: VOSSIUS & PARTNER
(86) Internationale Anmeldenummer: EP9701976
(87) Internationale Veröffentlichungsnummer: WO9738817

(56) Entgegenhaltungen:
- DE-U- 9 218 177
- US-A- 5 333 774
- US-A- 5 514 414
- PATENT ABSTRACTS OF JAPAN vol. 13, no. 365 (M-859) [3713] , 15.August 1989 & JP 01 122663 A (MITSUBISHI DENKI K.K.), 15.Mai 1989,

## Beschreibung

Die Erfindung betrifft ein Verfahren zum Abkühlen von Lötgut, insbesondere beim Dampfphasenlöten.

Beim Löten von Baugruppen stellt sich das Problem, das Lötgut so gut zu erwärmen, daß keine kalten Lötstellen entstehen können. Dies erfordert eine gründliche Durchwärmung der Lötpartner. Im Anschluß an das Löten besteht in vielen Fällen Interesse an einer raschen Abkühlung des Lötgutes. Während man bei vielen Lötverfahren in der Lage ist, relativ unproblematisch z.B. Kühlluft an das Lötgut zu führen, ist dies beim Dampfphasenlöten nicht der Fall. Beim Dampfphasenlöten legt man großen Wert darauf, den Klimazustand der Prozeßkammer in einem stabilen Zustand zu halten. Das verhindert, daß sofort nach dem Löten mit dem Kühlen des Lötgutes begonnen werden kann. Außerdem soll die Ausschleppung vom Lötmedium in Form von Dampfmolekülen verhindert werden, da die Dampfphasenlötflüssigkeiten sehr teuer sind. Nachdem das Lötgut aus der Dampfdecke herausgefahren wird, trocknet das Lötgut und kühlt durch natürliche Konvektion relativ langsam ab. Üblicherweise erfolgt die Kühlung des Lötgutes im Stand der Technik weit von der Dampfzone entfernt. Die Kühlzone ist in der Regel auch noch durch Schleusen abgeschottet, die verhindern, daß zu viele Moleküle aus der Dampfphase ausgeschleppt werden.

Die Kühlung des Lötgutes kann auch durch Aufsprühen einer kalten Flüssigkeit erfolgen. Eine solche Kühlung wird in der DE-39 15 040 offenbart.

Die EP-A-0 138 707 (die der US-A-4 612 712 entspricht) beschreibt eine Dampfphasen-Heizvorrichtung. Die DE-C-38 40 098 beschreibt eine Vorrichtung zum Entfernen von Lötrückständen mit einer Trocknungsstufe mit Gebläse.

Es ist bekannt, daß ein rasches Abkühlen der Lötstellen nach dem Löten Vorteile im Bezug auf die Metallstruktur der Lötstellen hat, Solange sich das Lot im flüssigen Zustand befindet, kommt es zum Ablegieren der beteiligten Metalle. Das ist in der Regel mit Nachteilen für die Metallurgie der Lötstelle verbunden und sollte möglichst vermieden werden. Wesentlich beim Löten ist daher die rasche Abkühlung des Lötgutes nach dem Löten. Man kann davon ausgehen, daß je kürzer die Flüssigkeitsphase des Lotes ist, desto besser ist die Qualität der Lötstelle. Aus verschiedenen Untersuchungen ist bekannt, daß ein sehr rasches Abkühlen der Lötstelle zu höherer Festigkeit führen kann. Dabei wurden die Lötstellen nahezu schockartig gekühlt. Dieser, unter Qualitätsgesichtspunkten wünschenswerte Vorgang, wird aber in keinem der heute in der Massenfertigung eingesetzten Lötverfahren erreicht.

Die Erfindung stellt sich die Aufgabe, ein Verfahren zur Kühlung von Lötgut zur Verfügung zu stellen, wobei bereits unmittelbar nach dem Löten eine schnelle Abkühlung des Lötgutes erreicht wird.

Es ist eine weitere Aufgabe der Erfindung, beim Löten Teile des Lötgutes außerhalb der Lötstellen zu kühlen.

Die Lösung der Aufgaben wird mit den Merkmalen der Patentansprüche 1 und 2 erreicht.

Bei der Lösung geht die Erfindung von dem Grundgedanken aus, eine Flüssigkeit auf das Lötgut aufzubringen und beschleunigt zu verdunsten. Dabei wird Verdampfungswärme dem Lötgut entzogen und es erfolgt eine schnelle Abkühlung des Lötgutes.

In einer vorteilhaften Ausführungsform wird das Verfahren beim Dampfphasenlöten eingesetzt. Dabei nutzt die Erfindung die besonderen klimatischen Bedingungen, die oberhalb der Dampfphase herrschen. Direkt oberhalb der Dampfphase fällt die Temperatur innerhalb von wenigen Höhen-cm von z.B. 200°C (Siedepunkt der Dampfphasenflüssigkeit) auf ca. 50°C ab. Außerdem befinden sich im Gebiet oberhalb der Dampfphase Dampfphasenmoleküle und z.B. Umgebungsluft. Die Erfindung geht von dem Grundgedanken aus, daß man die Feuchte der Atmosphäre oberhalb der Dampfphase, die im wesentlichen durch die Dampfmoleküle bestimmt wird, durch z.B. ein Gebläse zum Niederschlag auf dem Lötgut zwingt. Durch den Niederschlag der Flüssigkeit in Verbindung mit der durch das Gebläse erzeugten Zwangskonvektion und der daraus resultierenden Verdunstungkälte kann eine rasche Abkühlung des Lötgutes unmittelbar nach dem Ausfahren aus der Dampfphase, d.h. also innerhalb weniger Sekunden erreicht werden.

Im folgenden wird die Erfindung anhand der einzigen Figur näher erläutert. Es zeigt:

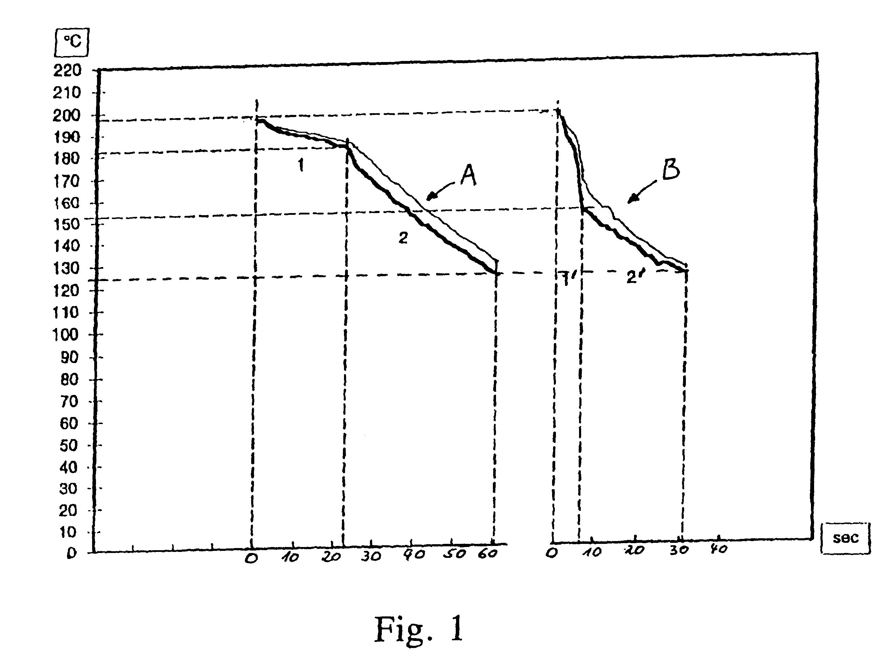

- Fig. 1: ein Temperatur/Zeit-Diagramm des erfindungsgemäßen Abkühlungsverfahrens im Vergleich mit einem Abkühlungsverfahren im Stand der Technik.

Die Kurven A zeigen die übliche Abkühlung nach dem Ausfahren aus der Dampfphase. Dabei zeigt die dicke Linie die Temperatur der Lötstelle und die dünne Linie die Temperatur an der Unterkante des Lötguts. Der Abschnitt 1 zeigt die Abkühlung durch natürliche Konvektion. Daran schließt sich ein Abschnitt 2 an, wo durch trockene Zwangskonvektion ohne Niederschlag einer Flüssigkeit gekühlt wird, was zu einer rascheren Abkühlung führt.

Die Kurven B zeigen die Abkühlung nach dem erfindungsgemäßen Verfahren. Wie bei den Kurven A stellt die dicke Linie die Temperatur der Lötstelle und die dünne Linie die Temperatur der Unterkante des Lötgutes dar. Im Abschnitt 1' wird durch nasse Zwangskonvektion gekühlt. Das bedeutet bei der Anwendung des erfindungsgemäßen Verfahrens in einer Dampfphasenlötanlage, daß Flüssigkeit aus der Dampfphase auf dem Lötgut durch z.B. ein Gebläse niedergeschlagen wurde und unter dem Einfluß des Gebläses beschleunigt verdunstet wurde. Die Folge ist eine Abkühlung innerhalb weniger Sekunden von etwa 198°C auf etwa 153°C. Im Abschnitt 2' wird wie bei den Kurven A durch trockene Zwangskonvektion gekühlt.

Ein Vergleich des erfindungsgemäßen Verfahrens (Kurve B) mit der üblichen Abkühlung (Kurve A) ergibt in der Anfangsphase (1') bei dem erfindungsgemäßen Verfahren einen Temperaturgradienten von ca. 6°/sec und bei dem üblichen Verfahren in der Anfangsphase (1) einen Temperaturgradienten von ca. 0,6°/sec. Das ergibt eine Erhöhung der Abkühlgeschwindigkeit um den Faktor 10. Die Folge ist eine Verbesserung der Lötstellenqualität.

Das erfindungsgemäße Verfahren funktioniert in einer Dampfphasenanlage nur in einem begrenzten Bereich oberhalb der Dampfphase, da sich nur dort genügend Moleküle der Flüssigkeit in der Umgebungsatmosphäre befinden und durch eine geeignete Gebläseeinstellung auch immer wieder neue Moleküle aus der Dampfphase gerissen werden. Will man in einem höheren Bereich arbeiten, muß zusätzlich eine Flüssigkeit aufgesprüht oder diese in geeigneter Weise aus der Dampfphase entnommen werden.

Eine weitere erfindungsgemäße Ausführungsform ist für den Fall vorgesehen, daß man in der Dampfphase Bauelemente auf der Leiterplattenunterseite wärmebehandeln möchte, z.B. beim Auslöten von Bauelementen auf der Unterseite, und die Gefahr besteht, daß Bauelemente, die auf der Oberseite der Baugruppen sitzen, wärmer als zulässig werden. So gibt es z.B. Gehäuse, die nicht wärmer wie 90°C werden dürfen. Bisher war es nicht möglich, eine Baugruppe in die Dampfphase einzufahren, ohne, daß die Bauelemente auf der Oberseite sehr heiß wurden, da z.B. durch Wärmeleitvorgänge die Wärme nach oben transportiert wird. Mit dem erfindungsgewmäßen Verfahren wird es ermöglicht, die Unterseite einer Baugruppe auch längere Zeit in der Dampfphase erwärmen zu lassen und gleichzeitig die Oberseite der Baugruppe gezielt zu kühlen. Erfindungsgemäß wird zu diesem Zweck die Baugruppe z.B. bis zur Leiterplattenoberkante in die Dampfphase eingefahren und erwärmt. Die Oberseite der Baugruppe wird mit abgeschiedenen Molekülen aus der Dampfphase befeuchtet und mittels eines Gasstroms durch Zwangskonvektion gekühlt. Zur Vermeidung einer Überhitzung der Bauelemente kann mit einer geringen Gasströmung gearbeitet werden.

Bei dem erfindungsgemäßen Verfahren kann die Gasströmung aus Umgebungsluft gebildet werden oder z.B. durch ein Inertgas erzeugt werden.

Weiterhin kann eine Zwangskonvektion auch durch Bewegen des Lötgutes erfolgen. Das könnte z.B. durch eine schwingende Bewegung des Lötgutes oberhalb der Dampfphase in einer Umgebungsatmosphäre erfolgen.

Erfindungsgemäß kann die Verdunstungsbeschleunigung auch durch Unterdruck ausgelöst werden. Das kann in Kombination mit der Gasströmung geschehen, indem anfangs eine Gasströmung Moleküle auf dem Lötgut abscheidet und dann die Gasströmung abgestellt wird und ein Unterdruck im Bereich des Lötgutes erzeugt wird, wobei die Flüssigkeit beschleunigt verdunstet wird.

## Patentansprüche

1. Verfahren zum Abkühlen von Lötgut, wobei eine Flüssigkeit auf das Lötgut aufgebracht und beschleunigt verdunstet wird.

2. Verfahren zum Abkühlen von Lötgut in einer Dampfphasenlötanlage, wobei eine Flüssigkeit auf das Lötgut aufgebracht und zum Entzug der Verdampfungswärme vom Lötgut unmittelbar nach dessen Ausfahren aus der Dampfphase beschleunigt verdunstet wird.

3. Verfahren nach Anspruch 1 oder 2, dadurch gekennzeichnet, daß die Verdunstungsbeschleunigung durch Zwangskonvektion erfolgt.

4. Verfahren nach Anspruch 3, dadurch gekennzeichnet, daß die Zwangskonvektion durch eine Gasströmung erreicht wird.

5. Verfahren nach Anspruch 3, dadurch gekennzeichnet, daß die Zwangskonvektion durch Bewegen des Lötgutes erfolgt.

6. Verfahren nach einem der Ansprüche 1 bis 5, dadurch gekennzeichnet, daß die Verdunstungsbeschleunigung durch Unterdruck erfolgt.

7. Verfahren nach einem der Ansprüche 1 bis 6, dadurch gekennzeichnet, daß die Gasströmung durch ein Gebläse erzeugt wird.

8. Verfahren nach Anspruch 4 oder 7, dadurch gekennzeichnet, daß das strömende Gas Luft oder ein Inertgas ist.

9. Verfahren nach einem der Ansprüche 1 bis 8, dadurch gekennzeichnet, daß die Flüssigkeit eine Dampfphasenlötflüssigkeit ist.

10. Verfahren nach Anspruch 9, dadurch gekennzeichnet, daß die Flüssigkeit aus der Dampfphase der Dampfphasenlötanlage auf dem Lötgut kondensiert wird.

11. Verfahren nach einem der Ansprüche 1 bis 10 mit den Schritten:
(a) Einfahren des Lötgutes nach dem Löten in einen Bereich oberhalb der Dampfphase, und
(b) Erzeugen der Gasströmung in einem Bereich oberhalb der Dampfphase derart, daß die Moleküle aus der Dampfphase von der Gasströmung transportiert werden.

12. Verfahren nach Anspruch 11, dadurch gekennzeichnet, daß das Lötgut 4 bis 6 cm über die Dampfphasendecke gefahren wird.

13. Verfahren nach Anspruch 11 oder 12, dadurch gekennzeichnet, daß zusätzlich Dampfphasenlötflüssigkeit auf das Lötgut gesprüht wird.

14. Verfahren nach einem der Ansprüche 1 bis 13 mit den Schritten:
(a) Fahren des Lötgutes zum Löten mit den Lötstellen in die Dampfphase, wobei die Oberseite des Lötgutes außerhalb der Dampfphase verbleibt, und
(b) Erzeugen der Gasströmung auf der Oberseite des Lötgutes und der Dampfphase.

15. Verfahren nach Anspruch 11 bis 14, wobei das Lötgut befeuchtet, anschließend die Gasströmung ausgeschaltet und ein Unterdruck an dem Lötgut erzeugt wird.

## Claims

1. A process for cooling soldered objects, wherein a liquid is applied onto the soldered objects and is evaporated in an accelerated manner.

2. A process for cooling soldered objects in a vapour phase soldering apparatus, wherein a liquid is applied onto the soldered objects, and, for withdrawal of the evaporation heat, is evaporated in an accelerated manner from the soldered objects directly after they have been removed from the vapour phase.

3. The process of claim 1 or 2, characterized in that acceleration of evaporation is effected by means of forced convection.

4. The process of claim 3, characterized in that forced convection is achieved by means of a gas stream.

5. The process of claim 3, characterized in that forced convection is effected by way of moving the soldered object.

6. The process according to any one of claims 1 to 5, characterized in that the evaporation is accelerated by means of low pressure.

7. The process according to any one of claims 1 to 6, characterized in that the gas stream is produced by a blower.

8. The process of claim 4 or 7, characterized in that the streaming gas is air or an inert gas.

9. The process according to any one of claims 1 to 8, characterized in that the liquid is a vapour phase soldering liquid.

10. The process of claim 9, characterized in that the liquid is condensed from the vapour phase of the vapour phase soldering apparatus onto the soldered object.

11. The process according to any one of claim 1 to 10 comprising the steps:
(a) Introducing the soldered object after soldering into a region above the vapour phase, and
(b) generating a gas stream in a region above the vapour phase in a manner that the molecules from the vapour phase are transported by the gas stream.

12. The process of claim 11, characterized in that the soldered object is transported 4 to 6 cm above the vapour phase layer.

13. The process of claim 11 or 12, characterized in that vapour phase soldering liquid is additionally sprayed onto the soldered object .

14. The process according to any one of claims 1 to 13, comprising the steps:
(a) Transporting the soldered object to the vapour phase for soldering with the joints to be soldered, wherein the upper surface of the soldered object remains outside the vapour phase, and
(b) generating a gas stream on the upper surface of the soldered object and the vapour phase.

15. The process according to claims 11 to 14, wherein the soldered objects are wetted, then the gas stream is turned off and low pressure is generated at the soldered objects.

## Revendications

1. Procédé pour le refroidissement de produits brasés, dans lequel on applique un liquide sur le produit brasé et l'on procède à son évaporation de façon accélérée.

2. Procédé pour le refroidissement de produits brasés dans une installation de brasage en phase vapeur, dans lequel on applique un liquide sur le produit brasé et afin d'en extraire la chaleur d'évaporation et, immédiatement après sa sortie de la phase gazeuse on procède à une évaporation de façon accélérée.

3. Procédé selon la revendication 1 ou 2, caractérisé en ce que l'évaporation accélérée s'effectue par convection forcée.

4. Procédé selon la revendication 3, caractérisé en ce que la convection forcée est obtenue par une circulation de gaz.

5. Procédé selon la revendication 3, caractérisé en ce que la convection forcée s'effectue par déplacement du produit brasé.

6. Procédé selon les revendications 1 à 5, caractérisé en ce que l'évaporation accélérée s'effectue par vide partiel ou dépression.

7. Procédé selon l'une des revendications 1 à 6, caractérisé en ce que la circulation de gaz est générée par une soufflante.

8. Procédé selon la revendication 4 ou 7, caractérisé en ce que le gaz en circulation est de l'air ou un gaz inerte.

9. Procédé selon l'une des revendications 1 à 8, caractérisé en ce que le liquide est un liquide de brasage en phase vapeur.

10. Procédé selon la revendication 9, caractérisé en ce que le liquide provenant de la phase vapeur de l'installation de brasage en phase vapeur est condensé sur le produit brasé.

11. Procédé selon l'une des revendications 1 à 10 comportant les étapes consistant à :
(a) introduire le produit brasé après l'opération de brasage dans une zone au-dessus de la phase vapeur, et
(b) générer la circulation de gaz dans une région au-dessus de la phase vapeur de telle sorte que les molécules provenant de la phase vapeur se trouvent transportées par la circulation de gaz.

12. Procédé selon la revendication 11, caractérisé en ce que le produit brasé est amené sur 4 à 6 cm au-dessus du plafond de la phase vapeur.

13. Procédé selon la revendication 11 ou 12, caractérisé de plus en ce que du liquide de brasage en phase vapeur est pulvérisé sur le produit brasé.

14. Procédé selon l'une des revendications 1 à 13 comprenant les opérations consistant à :
(a) introduire le produit à braser pour l'opération de brasage avec les joints de brasage ou brasures dans la phase vapeur, moyennant quoi le côté supérieur du produit brasé demeure à l'extérieur de la phase de vapeur, et
(b) générer la circulation de gaz sur le côté supérieur du produit brasé et de la phase gazeuse.

15. Procédé selon les revendications 11 à 14, dans lequel on humidifie le produit brasé et ensuite on coupe la circulation de gaz et l'on crée une dépression ou vide partiel sur le produit brasé.
